# EUROPEAN PATENT APPLICATION

(11) **EP 1 301 051 A2**
(43) Date of publication of application: **09.04.2003**
(21) Application number: 02102394.0
(22) Date of filing: 30.09.2002
(51) Int. Cl.: H04Q 7/30

(54) **An improved mechanism for speech transmission**

(30) Priority: 03.10.2001 FI 20011931
(71) Applicant: Nokia Corporation, 02150 Espoo (FI)
(72) Inventor: Stenberg, Timo, 01600, Vantaa (FI); Torvinen, Marko, 02810, Espoo (FI); Pulkkinen, Jani, 02760, Espoo (FI)
(74) Representative: Äkräs, Tapio

(57) **Abstract**

The invention relates to a method of reducing speech transmission delay in a mobile communications system, in which system speech encoded into speech blocks is transmitted over air interface in uplink direction from a first mobile terminal to a first base station and in downlink direction via a second base station to a second mobile terminal by multiplexing the blocks of the encoded speech into time slots of a frame structure for the communication. The place of the speech block in the frame structure is determined so that substantially no time gap exists in communications when the speech block is transmitted from the second base station to the second mobile terminal.

## Description

### Field of the invention

The present invention relates to communications systems, and more particularly to mechanisms for reducing speech delay in a mobile radio network.

### Background of the invention

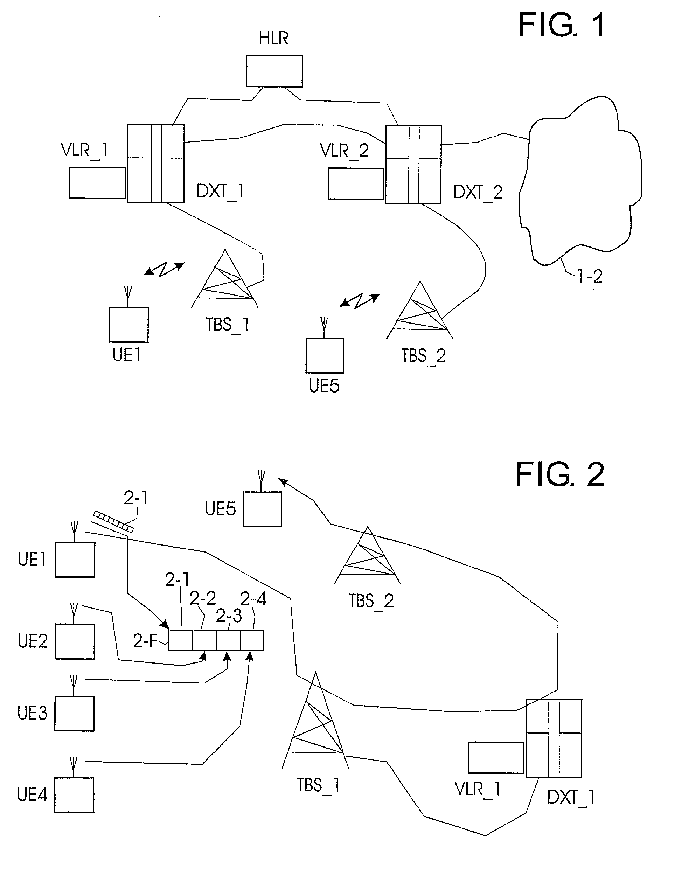

The TETRA (TErrestrial Trunked RAdio) system is a digital mobile communications system developed primarily for public safety and security, for public trunking operators, and for utilities and industry. A typical TETRA network architecture, as illustrated in Figure 1, comprises digital exchanges DXT_1, DXT_2 (DXT, Digital Exchange for TETRA) to which base stations TBS_1, TBS_2 (TBS, TETRA Base Station) are connected. The TETRA network may utilize a distributed subscriber database structure so that there is a home location register HLR or a home database (HDB) which comprises permanent information about individual and/or group subscribers in the subscribers' home network, and a visitor location register VLR_1, VLR_2 or a visitor database (VDB) which comprises temporary information about individual and/or group subscribers UE_1, UE_5 (UE, User Equipment) registered to the network. Typically each DXT is provided with a VLR/VDB. One or some of the DXTs (DXT_2) may provide a gateway to other communications networks 1-2.

Regarding the invention, the operation and structure of the TETRA system are described only to a degree that will assist in comprehending the reducing of the speech delay according to the invention and its embodiments. For a more detailed description of the TETRA system, reference is made to the ETSI (European Telecommunications Standards Institute) TETRA specifications that are available at the ETSI home site, www.etsi.org.

TETRA is also a TDMA (Time Division Multiple Access) system. It means that in the TETRA system several signals may be interleaved in time for transmission over a common channel. In the TETRA system the physical channel, the connection of a TETRA terminal to the TETRA network, is a time slot.

Figure 2 illustrates the TETRA frame structure in connection with the typical TETRA system. A TDMA frame 2-F comprises 4 14.167 ms long time slots 2-1 ... 2-4, each of which consists of 60 ms compressed speech. Thus a TETRA TDMA frame is 56.67 ms long. However, the traffic channel frames the base station TBS_1 receives over the air interface from the TETRA terminals UE_1 ... UE_5 (User Equipment) are transmitted as 60 ms blocks at 8 kbps in the fixed network. The value 60 ms is the length of the frame in which speech and control bits are transmitted in the fixed network. In other words, it is also the frame rate for speech decoding in audio and PSTN (Public Switched Telephone Network) interfaces.

In a typical TETRA system the FSTE (First Speech Transport Encoding) coding format based on the TETRA 09.54 input paper "*Mapping of Traffic Channels on Inter System Interface*" is utilized when speech is transmitted between network elements and between networks.

Since the TETRA frame in the air is 56.67 ms long, the frame has to be delayed so that it can be transmitted in the fixed network with 60 ms blocks. This is done by the base station, which converts the received frames into 60 ms frames. But in case the speech is transmitted back over air interface, i.e. when speech is transmitted e.g. first from the mobile terminal UE_1 to the exchange DXT_1 via a base station TBS_1 and then from said exchange to another mobile terminal UE_5 via another base station TBS_2, additional buffering is required to overcome the time gap of the 18^{th} frame of the 18-frame-long TETRA multiframe. In other words, a non-continuous air channel data communication has to be converted to continuous fixed network communication, and back to the non-continuous air channel communications, if the speech is intended to another mobile TETRA terminal user.

The current approach used to solve the problem uses buffering of the last 18^{th} frame of the TETRA multiframe on the fixed network side. This is possible, because the TETRA multiframe MF comprises 17 frames for data and one frame for signalling. Each of these 17 data frames can carry a 60 ms speech sample in the fixed network. The duration of 17 data frames in the fixed network (17*60 ms) equals the duration of 18 data frames on the air channel (18* about 56.67 ms). Thus the air channel signal is delayed in order to output the speech uninterrupted after the air interface in the fixed network.

The problem with the above-mentioned arrangement is the low quality of speech. This is due to frame rate differences between the air interface and the fixed network.

### Brief disclosure of the invention

It is thus an object of the present invention to provide a method and an apparatus for implementing the method so as to alleviate the above mentioned disadvantage. The objects of the invention are achieved by a method and an arrangement, which are characterized by what is stated in the independent claims. The preferred embodiments of the invention are disclosed in the dependent claims.

The invention is based on the optimised speech transport encoding, which removes the need for buffering of frames of different data rates. The speech frames are transmitted further at the substantially same instant they are received, at the same frame rate in the fixed network part of a typical TETRA system as they are received from the air interface, and a TDMA frame number is transmitted within the block so that the 18^{th} frame gap can be dealt optimally.

An advantage of the method and arrangement of the invention is that the coding shortens the speech delay of mobile-to-mobile calls thus improving the quality of speech.

### Brief description of the drawings

In the following the invention will be described in greater detail by means of preferred embodiments with reference to the accompanying drawings, in which
Figure 1 illustrates architecture of a typical TETRA system;
Figure 2 illustrates a TETRA frame structure in connection with a TETRA architecture;
Figure 3 shows a table of OSTE speech block;
Figures 4a and 4b show frame structure and timing of a typical TETRA system;
Figure 5 shows a table of coding of uplink frame number; and
Figure 6 shows a table of speech delay comparison of two coding systems.

### Detailed description of the invention

Although the invention will be described in connection with a TETRA system, it can be applied in TDMA systems in which a frame exists substantially only for signalling.

The basic idea of the invention is to use an optimised speech encoding mechanism. It can be named as OSTE (Optimised Speech Transport Encoding). The mechanism eliminates the need for buffering caused by different frame rates of the communication over the air interface and in the fixed network. In fact, the speech frames received from a first mobile terminal are forwarded further from a first base station to a second base station at the substantially same instant they are received, at the same frame rate as they are received from the air interface, at 56.67ms intervals. The TDMA frame number is inserted in connection with each frame and is transmitted within the block, so that the time gap of the 18^{th} frame can be dealt optimally. The need for buffering is removed e.g in systems where there is an extra frame for signalling, like in a typical TETRA system with 18^{th} frame as a control frame in an 18-frame-long multiframe.

In other words, the idea of the invention is "to imitate" a packet switched system in the air interface, to model the data communications of the air interface in the fixed network part of the system.

The OSTE coding mainly shortens the speech delay of a mobile terminal UE to another mobile terminal calls. These calls may be proceeded e.g. from a first mobile terminal to a TETRA exchange via a base station and then from said exchange to a second mobile terminal via another base station. In other types of calls e.g. from UE to PSTN or to a dispatcher the frame rate must be changed from 56.67 ms to 60 ms before audio data is generated, or the PSTN or dispatcher originating 60 ms audio data must be converted into 56.67 ms frame rate for communication over the air.

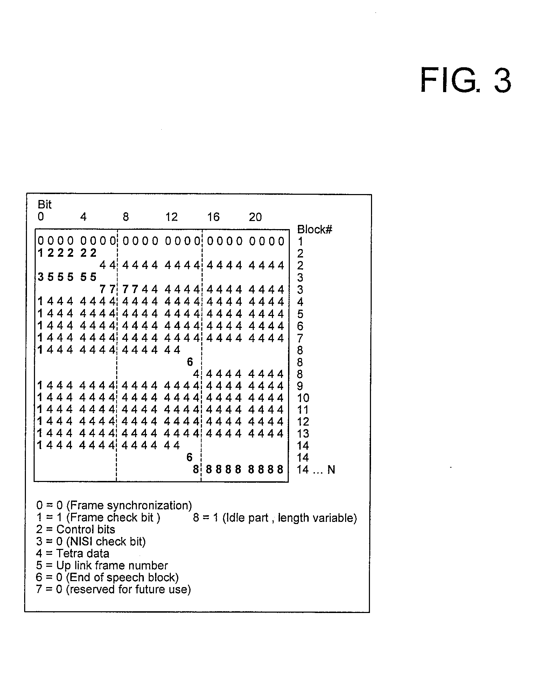

According to the invention the frame of a typical TETRA system is modified in the TBS according to Figure 3. Therein the transmission time of the frame over 8 kbps channel is 14 blocks x 3 ms = 42 ms, which is below the TDMA frame repetition rate of 56.67ms.

In systems with OSTE coding the time slot is divided into two sub-slots, which both sub-slots are transmitted in a row. In the table, number 0 is for frame synchronization indicating that a frame is beginning. Bits numbers 1 are placed for frame checking. Bits number 2 are control bits and bits number 3 are for checking purposes. Number 4 represents TETRA data of one slot. Number 5 represents uplink frame number, i.e. the index number with which a frame can be identified. Numbers 6 are end of speech blocks, and number 7 is reserved for future use. Number 8 is idle part. It can be seen from the table that each block 1 ... 14 contains 24 bits making altogether 336 bits for the OSTE speech block.

The frame number of the received uplink frame FI is transmitted with the frame as shown in Figure 3, if the originator is an UE. When a new speech item starts and it goes back to downlink, the TBS of the downlink has to perform the following algorithm to decide the downlink frame to be used. It can be the first available frame FO (Frame Out) or the next one:
IF FO ≥ FI THEN send in FO
ELSE send in FO+1

If the first available frame has smaller number than the received uplink frame FO < FI (FI, Frame In) then the input will reach the frame number 18 first. TBS has to buffer the output for the duration of one frame in order to have data for sending while input idles with the 18^{th} frame. If the frame has no frame number and it is sent at TDMA rate, then the worst case must be assumed: i.e. TBS has to skip the next available slot.

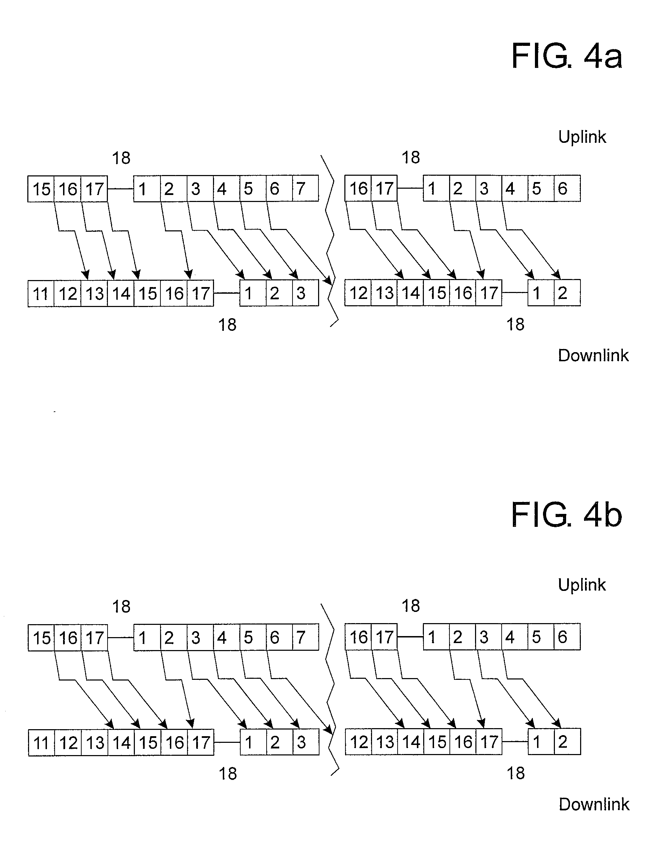

Figure 4a shows a frame structure and timing of a multiframe structure of a typical TETRA system consisting of 17 data frames and the 18^{th} frame functioning e.g. for signalling purposes. In Figure 4a the uplink frame 15 is transmitted in the first available downlink slot 13, the uplink frame 16 is transmitted in the downlink slot 14 etc. This method may cause a gap in the downlink frame 16 as depicted, since the uplink frame 18 contains no speech data for transmission.

In one embodiment of the invention, as described above and shown in Figure 4b, the rule "*if FO >= FI then use the first available slot, ELSE use the next slot"* transfers the start of the data into the downlink frame 14. This causes no gap in the downlink.

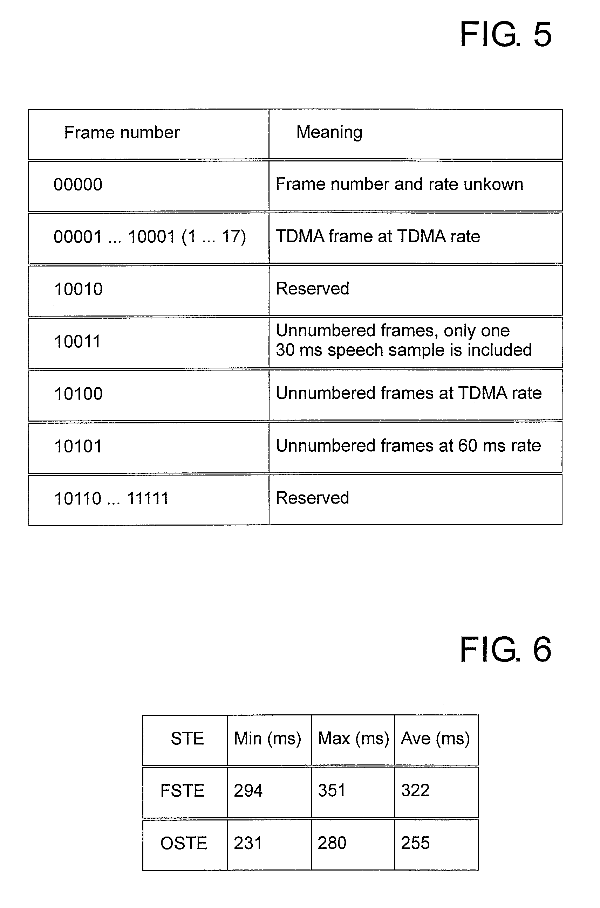

Figure 5 shows a table of coding of uplink frame numbers. Frames are numbered as binary numbers from 00000 to 11111. Definitions of frame numbers are also presented in the table. For example the frame numbers 00001 ... 10001 (1 ... 17 in decimal numbers) represent TDMA frames at TDMA rate. Figure 6 shows a table of theoretical speech delay comparison of two encoding systems. The call used in the calculations is an UE - UE duplex multi site call, i.e. a simultaneous two-way and independent call in both directions from the UE terminal to another UE via two different base stations. In the calculations TETRA base stations are synchronised. The presented minimum (min, ms) and maximum (max, ms) values are obtained by selecting different uplink and downlink slots. Also average calculations (ave, ms) are made and shown in the table.

From the table of Figure 6 it can be seen that the delay reduction from the currently used FSTE encoding system to the proposed OSTE encoding system is about 67 ms on average. This reduction achieved by removing the unnecessary frame rate conversions from UE to UE calls improves the speech quality remarkably. According to the invention and its embodiments the base station does not have to convert the received frames from 56.67 ms frames into 60 ms frames to overcome the 18th frame gap like in the state of the art speech coding systems.

In the mechanism, the described speech packets are transmitted in a loose way. This means that all the bits available are not utilised. This gives the advantage of not having a need for adaptation between the air interface and a PCM pipe, the fixed network, because under full link speeds transmission velocity provides no problems in case of sliding of the clocks forms. Hence also synchronisation between interfaces is totally unnecessary.

The invention and its embodiments are also applicable in communication through inter-system interface, ISI, which interface allows communication between two or more TETRA networks, also of different manufacturers, which networks may form a larger network. In that case data is transmitted over the ISI interface in the form it is sent from the 1^{st} base station to the fixed network.

It will be obvious to a person skilled in the art that, as technology advances, the inventive concept can be implemented in various ways. The invention and its embodiments are not limited to the examples described above but may vary within the scope of the claims.

## Claims

1. A method of reducing speech transmission delay in a mobile communications system, in which system speech encoded into speech blocks is transmitted over air interface in uplink direction from a first mobile terminal to a first base station and in downlink direction via a second base station to a second mobile terminal by multiplexing the blocks of the encoded speech into time slots of a frame structure for the communication, **characterized in that**
the place of the speech block in the frame structure is determined so that substantially no time gap exists in communications when the speech block is transmitted from the second base station to the second mobile terminal.

2. A method according to claim 1, **characterized in that**
a frame number is inserted into each speech block of the uplink data frame in the first base station when the data frame is received from the first mobile terminal over the air interface;
data frames provided with said uplink frame numbers are transmitted at the same rate in a fixed network part of the mobile system as they were received from the air interface; and
the selection of the data frame for the speech block in the downlink frame structure is decided in the second base station on the basis of said uplink frame number before sending the speech block to the second mobile terminal.

3. A method according to claim 1 or 2, **characterized in that** the selection of the data frame for the speech block is decided so that
if the number of the first available downlink data frame in the second base station exceeds or equals to the uplink data frame number, the speech block is sent downlink along the first available downlink data frame; otherwise
the block is sent downlink along the next available downlink data frame.

4. A method according to claim 1 or 2, **characterized in that** the selection of the data frame for the speech block is decided so that
IF FO ≥ FI THEN send in FO
ELSE send in FO+1,
wherein FO is a frame number of the first available downlink data frame, and FI is a frame number of the received uplink data frame.

5. A method according to any one of the preceding claims 1 - 4, **characterized in that** if the frame at the downlink base station has no data frame number, the slot is sent downlink along the next available data frame.

6. A method according to any one of the preceding claims 1 - 5, **characterized in that** data is transmitted over the interface of two systems in the form it is sent from the first base station to the fixed network.

7. A base station element in a mobile communications system, in which system speech encoded into speech blocks is transmitted over the air interface in uplink direction from a first mobile terminal to a first base station and in downlink direction via a second base station to a second mobile terminal by multiplexing the blocks of the encoded speech into time slots of a frame structure for the communication, **characterized in that**
it is arranged to determine the place of the speech block in the frame structure so that substantially no time gap exists in communications when the speech block is transmitted from the second base station to the second mobile terminal.

8. A base station element according to claim 7, **characterized in that** it comprises
means for inserting a frame number to each speech block of the uplink data frame when the data frame is received from the first mobile terminal over the air interface;
means for transmitting data frames provided with said uplink frame numbers at the same rate in a fixed network part of the mobile system as they were received from the air interface; and
means for deciding the selection of the data frame for the speech block in the downlink frame structure on basis of said uplink frame number before sending the speech block to the second mobile terminal.
